# EUROPEAN PATENT SPECIFICATION

(11) **EP 1 947 250 B1**
(45) Date of publication and mention of the grant of the patent: **01.05.2013**
(21) Application number: 08150257.7
(22) Date of filing: 15.01.2008
(51) Int. Cl.: E02F 9/08, B60K 11/04, E02F 9/00, B60K 11/08

(54) **Cooling structure of construction machine**
Kühlkonstruktion einer Baumaschine
Structure de refroidissement d'une machine de construction

(30) Priority: 16.01.2007 JP 2007006972
(43) Date of publication of application: 23.07.2008
(73) Proprietor: Kobelco Construction Machinery Co., Ltd., Hiroshima-shi, Hiroshima 731-0138 (JP)
(72) Inventor: Kinoshita, Shinichi Kobe Corporate Research Lab., Nishi-ku Kobe-shi Hyogo 651-2271 (JP); Kimura, Yasumasa Kobe Corporate Research Lab., Nishi-ku Kobe-shi Hyogo 651-2271 (JP); Mitsuda, Masahiko Kobe Corporate Research Lab., Nishi-ku Kobe-shi Hyogo 651-2271 (JP); Nakashima, Hajime Kobelco Construction Machinery Co., Ltd., Hiroshima-shi Hiroshima 731-0138 (JP); Taniuchi, Tomoya Kobelco Construction Machinery Co., Ltd., Hiroshima-shi Hiroshima 731-0138 (JP)
(74) Representative: TBK

(56) References cited:
- JP-A- 11 081 960
- JP-A- 2006 206 034
- US-A- 6 032 620
- US-B1- 6 408 969

## Description

### BACKGROUND OF THE INVENTION

### (FIELD OF THE INVENTION)

The present invention relates to a cooling structure of a construction machine having a soundproof function on an intake side which conducts cooling air introduced from the exterior into a heat exchanger.

### (DESCRIPTION OF THE RELATED ART)

As techniques for enhancing the soundproof function on an intake side in a construction machine such as a hydraulic excavator, there are known the techniques disclosed in JP-A2006206034 and JP-A-2006207576 (hereinafter referred to as Patent Literatures 1 and 2, respectively).

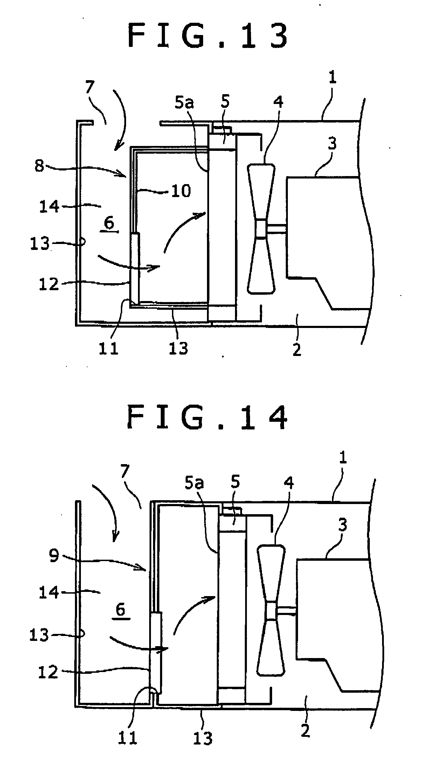

With a hydraulic excavator as an example, the above conventional techniques will now be described. Figs. 13 and 14 are each a sectional view for explaining a cooling structure in a rear section of an upper rotating body of a hydraulic excavator.

In the rear section of the upper rotating body there is provided an engine room 2 covered with a cover member 1 such as a part of an engine guard and a counterweight and an upper surface of a fuel tank.

Within the engine room 2 there are provided an engine 3, a hydraulic pump (not shown), a cooling fan 4 adapted to be driven by the engine 3 to suck the outside air, as well as plural heat exchangers (shown here as one heat exchanger) 5 such as a radiator for cooling the engine, an oil cooler and an intercooler.

An intake chamber 6 is formed on an intake side of the heat exchanger 5 within the engine room 2 and a first intake port 7 for introduction of the outside air is formed in an upper surface of the intake chamber 6 (an upper surface of an intake-side end portion of the cover member 1).

The intake room 6 is formed independently (in an air flow-cutoff state) by the heat exchanger 5, a suitable dividing member and a sealing member with respect to the space of the engine room 2 where the engine 3, etc. are installed. Within the intake chamber 6 is installed a shielding member (a duct 8 in the technique shown in Fig. 13, a shielding plate 9 in the technique shown in Fig. 14, hereinafter may be referred to together as the shielding member).

The duct 8 is formed in a box shape using a duct material different from the material of the cover member 1 and is mounted so as to surround a heat exchanger core surface 5a in a hermetically sealed state.

On the other hand, the shielding plate 9 is formed to shield between the heat exchanger core surface 5a and the first intake port 7, which is throughout the whole width of the intake chamber.

In the case of a duct type there is provided a duct front face portion 10 opposed to the heat exchanger core surface 5a, while in the case of a shielding plate type a second intake port 11 is formed in the shielding plate 9 and a dust preventing filter 12 is provided to the second intake port 11 so as to cover the whole surface of the second intake port 11.

An absorbing member 13 is provided on each of a wall surface in the intake chamber 6, namely, on the inner surface of the cover member 1, and inner and outer surfaces of the duct 8. The cover member 1 and the duct 8 form the intake chamber 6.

These structures are double structures in which the interior of the intake chamber 6 is partitioned into two compartments by the shielding members 8, 9, as is described also in Patent Literatures 1 and 2. Therefore, by suppressing, with use of the shielding members 8, 9, the sound (direct sound) propagated directly from the heat exchanger core surface 5a to the exterior to suppress the diffusion thereof, and by the attainment of a sound damping effect based on reflection and attenuation of a sound with the shielding members 8, 9, in addition to a sound damping effect induced by the chamber wall of the intake chamber 6, it is possible to enhance the intake-side soundproof performance remarkably in comparison with the case where the shielding members 8 and 9 are not formed.

Thus, in the construction having the shielding members 8, 9 installed within the intake chamber 6, a vertically extending intake passage 14 is formed between the shielding members 8, 9 (or the duct front face portion 10 in case of the duct type) and the cover member 1.

With reference to the duct type shown in Fig. 13 as an example, the intake passage 14 is formed between the duct front face portion (intake passage-forming surface) 10 and the cover member 1 opposed thereto. The outside air sucked in from the first intake port 7 passes downward through the intake passage 14, then in the second intake port 11 it changes its flowing direction to horizontal one, enters the interior of the duct 8 and advances toward the heat exchanger core surface 5a.

The larger the amount of air (air volume) passing through the intake passage 14, the higher the cooling efficiency of the heat exchanger 5, etc. This air volume depends on the sectional area of the intake passage 14, but actually the sectional area of the intake passage cannot always be taken sufficiently large in a construction machine wherein a limitation is placed on the space of the intake chamber 6 because of a demand for the reduction of size like a hydraulic excavator.

In this connection, according to the above conventional techniques, the shielding members 8, 9 are used taking note of only the intake-side soundproof performance, and in case of installing the duct front face portion 10 or the shielding plate 9 vertically as in the drawing, there has been a room for improvement in point of ensuring a required air volume.

Further cooling structures of a construction machine are known from JP-A-11081960 and US-B1-6408969. The preamble of the independent claim is based on JP-A-11081960 wherein the oil cooler constitutes a parttion of the colling structure.

### SUMMARY OF THE INVENTION

It is an object of the present invention to provide a cooling structure of a construction machine capable of attaining both intake-side soundproof performance and assurance of a desired air volume.

The object of the invention is achieved with a cooling structure of a construction machine having the features of the preamble of claim 1. Further advantageous developments of the invention are subject-matter of the dependent claims.

The cooling structure of a construction machine according to the present invention comprises an engine, a heat exchanger, a cooling fan and a cover member which covers an engine room in which said engine, said heat exchanger and said cooling fan are provided, wherein the cooling structure is constructed in such a manner that the outside air is sucked into the engine room by rotation of the cooling fan and is passed through the heat exchanger, further it satisfies the following conditions:
(A) on an intake side of the heat exchanger in the engine room an intake chamber is formed independently of the other space in the engine room;
(B) a first intake port for the introduction of outside air into the intake chamber is formed in the chamber wall of the intake chamber formed by the cover member;
(C) on a front side of a heat exchanger core surface in the intake chamber a shielding member is disposed so as to cut off communication between the heat exchanger core surface and the first intake port and partition the interior of the intake chamber into two compartments and in a state in which an intake passage is formed between an intake passage-forming surface as at least one surface of the shielding member and the cover member;
(D) a second intake port for conducting the air introduced from the first intake port to the heat exchanger core surface is formed in the intake passage-forming surface of the shielding member; and
(E) at least the portion of the intake passage-forming surface of the shielding member where the second intake port is formed is inclined in a direction in which the sectional area of the intake passage becomes maximum on the first intake port side and decreases gradually toward the opposite side.

Thus, according to the present invention, on the premise of the construction in which a shielding member (e.g., a duct or a shielding plate) is disposed on the front side of the heat exchanger core surface in the intake chamber, a second intake port is formed on the intake passage-forming surface of the shielding member, and at least the portion of the intake passage-forming surface where the second intake port is formed is inclined in a direction in which the sectional area of the intake passage becomes maximum on the first intake port side and decreases gradually toward the opposite side. Therefore, in the following points, it is possible to increase the air volume for cooling while making the most of the soundproof performance of the shielding member.

In connection with the air volume:

Reference is here made as an example to the construction (see Fig. 1) wherein the first intake port is formed in the upper surface of the intake chamber, the whole of the shielding member is inclined vertically so that the intake passage becomes wider upward, and the second intake port is formed in the lower half portion of the shielding member. In this example, if the lower end position of the shielding member is the same as in the techniques shown in Figs. 13 and 14, then by tilting the shielding member as above, the sectional area of the intake passage in the second intake port portion can be increased than in the said conventional techniques. Consequently, draft resistance decreases and it is possible to increase the amount of air introduced into the shielding member.

Also by moving the whole of the shielding members 8, 9 vertically to the heat exchanger side with respect to the illustrated position thereof in the techniques shown in Figs. 13 and 14, without tilting the intake passage-forming surface as in the present invention, it is possible to increase the sectional area of the intake passage.

In this case, however, the whole of the space (the spacing between the second intake port 11 and the heat exchanger core surface 5a) formed inside the shielding members 8, 9 is narrowed, so that the air flowing into the space through the second intake port becomes difficult to pervade uniformly throughout the whole of the heat exchanger core surface. Consequently, the cooling efficiency of the heat exchanger, etc. is deteriorated and the improvement of the cooling efficiency, which is the very object of increasing the amount of air to be introduced, is not attained to a satisfactory extent.

On the other hand, according to the present invention, since the space inside the shielding member changes in a continuous manner by tilting the shielding member, the introduced air becomes easier to pervade uniformly throughout the whole of the heat exchanger core surface. That is, it is possible to increase the air volume while ensuring a uniform air supplying function for the whole of the heat exchanger core surface.

In connection with soundproof function:

Soundproof effects attained by the provision of the shielding member, such as a direct sound diffusion leakage suppressing effect based on the double structure with the interior of the intake chamber being partitioned into two compartments by the shielding member, a sound damping effect by the provision of a chamber wall of the intake chamber and a sound, damping effect attained by reflection and attenuation of a sound with the shielding member, can be obtained almost equally to the case where the intake passage-forming surface is not inclined.

Moreover, as described above, since it is possible to increase the air volume and thereby enhance the cooling capacity, it becomes possible to decrease the number of revolutions (fan noise) of the cooling fan.

In this way it becomes possible to attain both the soundproof performance on the intake side and assurance of a desired air volume.

### BRIEF DESCRIPTION OF THE DRAWINGS

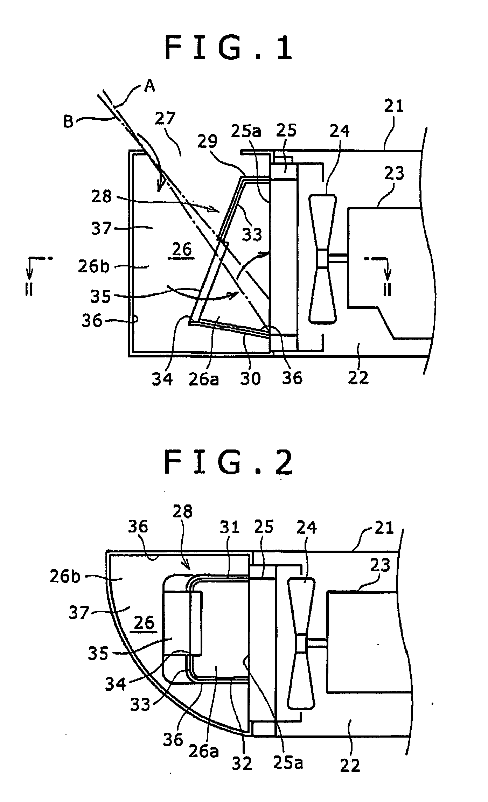

Fig. 1 is a schematic sectional view showing a first embodiment of the present invention.
Fig. 2 is a sectional view taken on line II-II in Fig. 1.

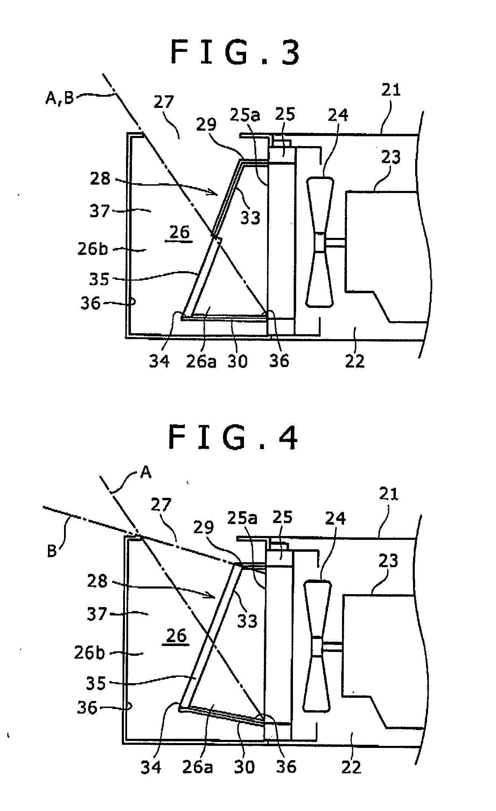

Fig. 3 is a schematic sectional view showing a second embodiment of the present invention.
Fig. 4 is a schematic sectional view showing a third embodiment of the present invention.

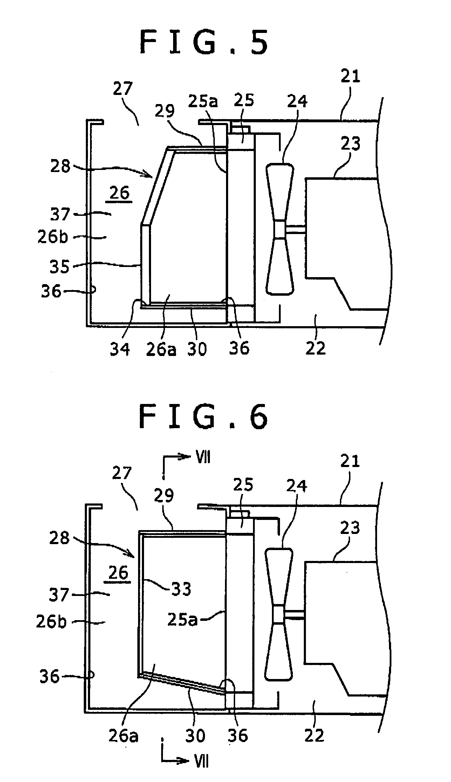

Fig. 5 is a schematic sectional view showing a fourth embodiment of the present invention.
Fig. 6 is a schematic sectional view showing a fifth embodiment of the present invention.

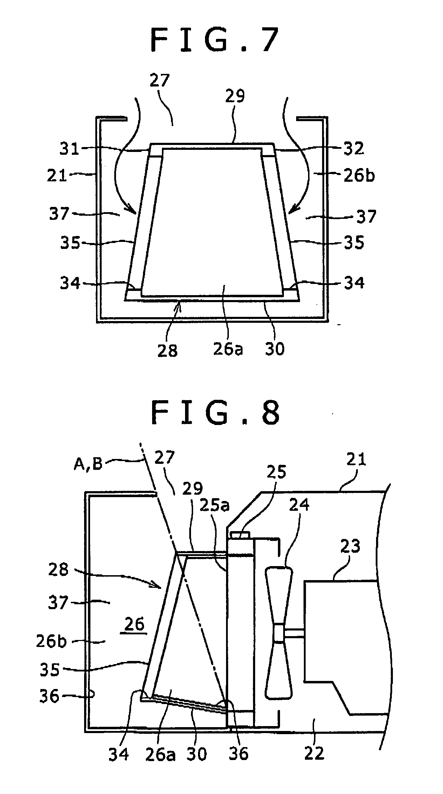

Fig. 7 is a sectional view taken on line VII-VII in Fig. 6.
Fig. 8 is a schematic sectional view showing a sixth embodiment of the present invention.

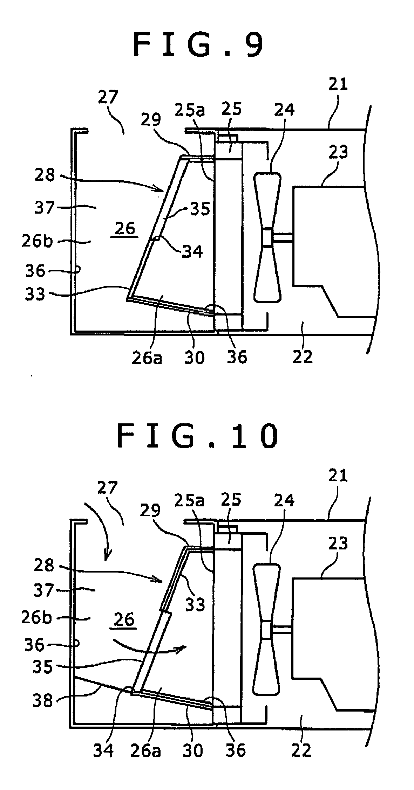

Fig. 9 is a schematic sectional view showing a seventh embodiment of the present invention.
Fig. 10 is a schematic sectional view showing an eighth embodiment of the present invention.

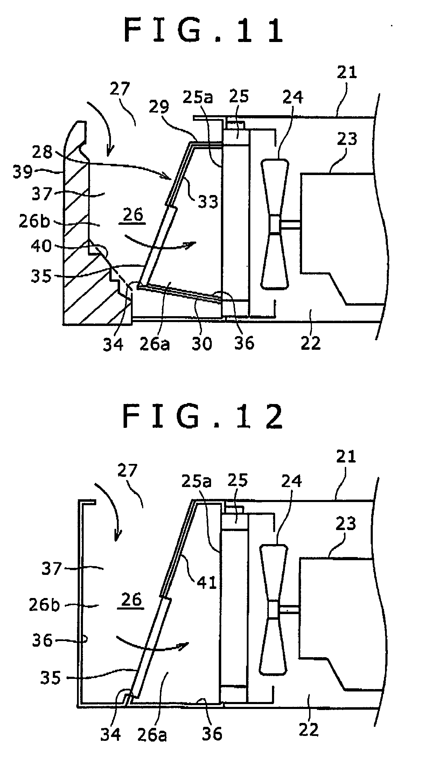

Fig. 11 is a schematic sectional view showing a ninth embodiment of the present invention.
Fig. 12 is a schematic sectional view showing a tenth embodiment of the present invention.
Fig. 13 is a schematic sectional view showing a conventional technique.
Fig. 14 is a schematic sectional view showing another conventional technique.

### DESCRIPTION OF THE PREFERRED EMBODIMENTS

### First Embodiment (see Figs. 1 and 2)

In each of the first to ninth embodiments shown in Figs. 1 to 11 there is provided a duct as a shielding member.

In the first embodiment the following basis construction is the same as in the technique shown in Fig. 13.
(A) In a rear section of an upper rotating body there is provided an engine room 22 covered with a cover member 21 such as an engine guard, a part of a counterweight and an upper surface of the fuel tank,
(B) In the engine room 22 there are provided an engine 23, a hydraulic pump (not shown), a cooling fan 24 and a heat exchanger (shown as a single unit) 25 such as a radiator.
(C) Within the engine room 22 an intake chamber 26 is formed on an intake side of the heat exchanger 25 and a first intake port 27 for introduction of cooling air from the exterior is formed in an upper surface (an upper surface portion of the cover member 21) of the intake chamber 26.
(D) The intake chamber 26 is formed independently (in a cut-off state of air flow) using the heat exchanger 25, a suitable dividing member and a sealing member with respect to the space in the engine room 22 which accommodates the engine 23, etc. Further, a duct 28 is provided in the intake chamber 26.

Using a duct material different from the material of the cover member 21, the duct 28 is formed independently in the shape of a box having an upper surface 29, a bottom 30, both front-rear side faces 31 and 32 and a front face portion 33 opposed to a heat exchanger core surface 25a.

The duct 28 is mounted in a state in which it surrounds the heat exchanger core surface 25a in an airtight manner (for example in a state in which an opening edge portion on the heat exchanger side is in hermetic sealing contact with an edge frame portion of the heat exchanger core surface 25a).

A second intake port 34 which opens horizontally is formed in the front face portion 33 of the duct 28. Further, a filler 35 for dust prevention is attached to the second intake port 34 so as to cover the same port.

In this embodiment the duct bottom 30 is declined on its front side toward the heat exchanger core surface 25a.

With the dust 28, the heat exchanger core surface 25a and the first intake port 27 are isolated from each other and the interior of the intake chamber 26 is partitioned into two compartments (an intra-duct space and the other space, hereinafter referred to as the first compartment and the second compartment, respectively) 26a and 26b.

With the duct 28, moreover, there is formed a substantially L-shaped air flow passage through which, as indicated by arrows in Fig. 1, the outside air introduced downward from the first intake port 27 is changed its flowing direction sideways in the second intake port 34 and is allowed to reach the heat exchanger core surface 25a.

A sound absorbing member 36 is attached to each of an inner surface of the cover member 21 which forms the intake chamber 26, as well as inner and outer surfaces of the duct 28.

Soundproof performance based on the above basic construction is basically the same as in the technique shown in Fig. 13.

More specifically, the heat exchanger core surface 25a is enclosed with the independent duct 28 and a flow path connecting the core surface 25a with the exterior is bent in a substantially L shape. Consequently, a direct sound propagated directly from the core surface 25a to the exterior can be shut off by the duct 28.

On the other hand, an intake sound leaving the heat exchanger core surface 25a repeats reflection an attenuation in the first compartment 26a and the second compartment 26b in the intake chamber 26, so that it is possible to obtain a high sound damping effect.

Further, the structure in question is an all-around double duct structure forming the independent duct 28 in the intake chamber 26 which is a kind of duct. Therefore, in comparison with a single structure comprising only the intake chamber 26, a sound is doubly blocked throughout the whole circumference of the cover member 21 which forms the intake chamber 26 and the duct 28, whereby the sound leak preventing effect can be enhanced to a remarkable extent. In addition, the sound propagation route can be restricted by the double duct structure. Particularly, in the case where a sound absorbing material 36 is provided in the interior as in this embodiment, it is possible to further enhance a sound damping effect attained by the sound absorbing material 36.

Besides, since the heat exchanger core surface 25a as a sound outlet is enclosed with the duct 28, it is possible to prevent diffusion of a sound in all directions.

In view of these points, the soundproof effect on the intake side can be enhanced to a great extent in comparison with the case where the duct 28 is not provided.

In this construction, moreover, since the above effect is attained by provision of the duct 28 in the intake chamber 26, there does not occur the drawback that the space for other equipment is narrowed as in case of adopting a construction wherein the soundproof function is enhanced by expanding the intake chamber 26; besides, the construction in question can be also applied to existing machines easily.

If only air-tightness is maintained between the duct 28 and the circumference of the heat exchanger core surface of the duct 28, the direct sound from the core surface 25a can be shut out positively by the duct 28. Therefore, in comparison with the case where air-tightness is provided throughout the whole inner surface of the cover member 21 which is of a complicated shape including a three-dimensional curved surface, a much narrower sealing area suffices. Besides, high degree of sealing can be attained because it is easy to seal.

In this embodiment, an intake passage 37 is formed between the front face portion (intake passage-forming face) 33 of the duct 28 and the side face portion of the cover member 21 opposed thereto. This point is the same as in the known techniques shown in Fig. 13.

In this embodiment, the whole of the front face 33 of the duct 28 is inclined in a direction in which the sectional area of the intake passage 37 becomes maximum on the first intake port 27 side (upper portion) as an air inlet side and decreases gradually toward the opposite side (lower portion), and the second intake port 34 is formed in a downstream-side half (lower half) of the inclined front face portion 33.

In this embodiment, as compared with the structure (the front face portion 10 is vertical) shown in Fig. 13, the whole of the front face portion 33 is inclined to the heat exchanger 25 side in a state in which a lower end of the front face portion 33 is set at the same position as a lower end of the front face portion 10.

According to this construction it is possible to obtain the following effects.
(i) By inclining the duct front portion 33 as above the sectional area of the intake passage 37 at the portion of the second intake port 34 can be made larger than in the structure of Fig. 13. As a result, draft resistance becomes lower and it is possible to increase the amount of air introduced into the duct 28.
(ii) Since the sectional area of the intake passage 37 becomes large at the upper portion (air inlet side) close to the first intake port 27, the air suction efficiency is high in comparison with the case where the said sectional area becomes large at the lower portion.
(iii) According to the construction in question the sectional area of the intake passage 37 is increased by inclining the duct front face portion 33, therefore, it is possible to ensure a sufficient lower space of the first compartment 26a in comparison with the case where the vertical front portion 10 in the structure of Fig. 13 is moved to the heat exchanger 5 side, that is, in comparison with the case where the spacing between the second intake port 11 and the heat exchanger core surface 5a is decreased while increasing the sectional area of the intake passage. Consequently, the introduced air can be allowed to pervade uniformly throughout the whole of the heat exchanger core surface 25a. That is, it is possible to increase the air volume while ensuring a uniform air supply function for the whole of the heat exchanger core surface 25a.
(iv) Since the whole of the duct front face portion 33 is inclined, not only the maximum sectional area of the intake passage 37 can be increased, but also the change of this sectional area becomes long and gentle toward the opposite side. Therefore, for example in comparison with the case where only the intake downstream side is inclined, draft resistance becomes lower and hence the effect of increasing the air volume is high.

In this way it is possible to increase the air volume and enhance the cooling efficiency while ensuring a certain soundproof performance on the intake side, this is, it is possible to obtain both soundproof performance and cooling efficiency.

Moreover, since the cooling capacity is enhanced by increasing the air volume as described above, it also becomes possible to decrease the number of revolutions of the cooling fan 24 and thereby further reducing the fan noise.

In this embodiment, since the whole of the second intake port 34 is positioned lower than the first intake port 27, there is no fear of a sound being directly propagated side of the machine. That is, "machine-side noise" can be greatly reduced.

### Second Embodiment (see Fig. 3)

According to the layout adopted in the first embodiment a part of the heat exchanger core surface 25a is seen directly from the exterior through the first and second intake ports 27, 34.

More specifically, according to the layout adopted in the first embodiment, a straight line B joining the outermost end of the first intake port 27 and an upper end of the second intake port 34 clearly lies above a straight line A joining an outer end of the first intake port and a lower end of the heat exchanger core surface 25a, although the degree thereof is slight as shown in Fig. 1.

Consequently, there occurs leakage of a direct,sound propagated directly from the heat exchanger core surface 25a to the exterior although the amount of the leakage is small.

For improvement on this point, in this second embodiment there is adopted a layout such that the second intake port 34 is positioned lower than in the first embodiment and on the side opposite to the heat exchanger 25 while the size thereof remains the same as in the first embodiment, whereby the straight line B becomes almost aligned with the straight line A (complete alignment, or the straight line B lies below or slightly above the straight line A).

In this case, the duct front face portion 33 is extended downward in its inclined state and the duct bottom 30 is made horizontal.

As a result, the direct sound can be shut out by the duct 28.

### Third Embodiment (see Fig. 4)

In the first and second embodiments the second intake port 34 is formed on only the intake downstream side (lower half) of the duct front face portion 33, while in this third embodiment a second intake port 34 is formed throughout the whole face of the duct front portion. In this case, the duct front portion no longer exists substantially as a face and is therefore not indicated by a reference numeral in the drawing.

This construction is disadvantageous in point of shutting off the direct sound because the area of the heat exchanger core surface 25a which is seen directly from the exterior becomes wider, but is advantageous in point of cooling efficiency because the introduced air can be supplied to the heat exchanger core surface 25a at a minimum resistance.

### Fourth Embodiment (see Fig. 5)

In this fourth embodiment a second intake port 34 is formed in the whole face of the duct front face portion as in the third embodiment, but only the intake upstream side (upper half) is inclined.

This embodiment is the same as the first to third embodiments in the construction that the duct front face portion is inclined at least at the portion where the second intake port 34 is formed and also in the effect that the sectional area of the intake passage can be increased in the second intake port portion than in the publicly known art.

The filter 35 may be wholly constituted by a single filter comprising an inclined portion and a vertical portion or may be constituted by two filters which are an inclined portion and a vertical portion as illustrated in the drawing.

This construction is advantageous in that when devices such as an air cleaner are to be installed in the first compartment 26a of the intake chamber, it is easy to ensure a space for the installation at the bottom (inside the uninclined portion).

A description will be given below about the results of numerical analysis made for verification of the air volume increasing effect according to the present invention.

### Analysis 1

With respect to the structure of the first embodiment shown in Figs. 1 and 2 (the whole of the duct front face portion is inclined and the second intake port 34 is formed in the lower half) and the structure shown in Fig. 13 (the duct front face portion 10 is made vertical and the second intake port 11 is formed in the lower half), both structures were modeled under the same size of the duct 8 and same basic conditions such as the opening areas of the second intake ports 34 and 11, and the air volume passing through each of the intake passages 14 and 37 was analyzed using a commercially available analytical software (FLUENT). The inclination of the duct front portion 33 in the model of the first embodiment was set at 23° relative to a vertical line.

As a result, in the structure shown in Fig. 13, the air volume was 83.8 m3/min, while in the structure of the first embodiment the air volume was 85.6 m3/min, indicating an air volume increase of 2%.

### Analysis 2

With respect to the structure of the third embodiment shown in Fig. 4 (the whole of the duct front face portion is inclined and the second intake port 34 is formed in the whole of the front face portion) and the structure (designated an uninclined structure) wherein the duct front face portion is not inclined although a second intake port is formed in the whole of the duct front face portion as in the structure of the third embodiment), both structures were modeled and the same analysis as above was performed. The inclination of the duct front face portion was set also at 23°.

As a result, in the uninclined structure the passing air volume was 84.0 m3/min, while in the structure of the third embodiment it was 88.7 m3/min, indicating an air volume increase of 7%.

The analysis was made also as to the structure of the fourth embodiment shown in Fig. 5 (only the upper half is inclined although the second intake port 34 is formed throughout the duct front face portion). As a result, there was obtained an air volume increase of 4% relative to the comparative structure.

### Fifth Embodiment (see Figs. 6 and 7)

In each of the first to fourth embodiments the duct front face portion 33 is formed as an intake passage-forming face and the second intake port 34 is formed therein, while in this fifth embodiment both front-rear side faces 31 and 32 of the duct 28 serve as intake passage-forming faces, the whole of both side faces 31 and 32 is inclined in a direction in which the sectional area of a pair of intakes passages 37 becomes maximum on a first intake port 27 side (upper portion) and decreases gradually toward the opposite side (lower portion), and second intake ports 34 are formed in the thus-inclined both side faces 31 and 32.

According to this construction, a total opening area of the second intake ports 34 can be taken large. Therefore, the increased air volume can be supplied to the heat exchanger core surface 25a efficiently at low resistance.

Although in this embodiment the second intake ports 34 are formed approximately throughout the whole except upper and lower portions of both side faces 31 and 32, the second intake ports 34 may be formed throughout the whole of both side faces or may be formed in only the lower half portions of both side faces 31 and 32 as in the second embodiment, or they may be formed throughout the whole of both side faces and only the upper half portions of both side faces may be inclined as in the fourth embodiment.

### Sixth Embodiment (see Fig. 8)

If the whole of the duct front face portion 33 is inclined and the second intake port 34 is formed throughout the duct front face portion as in the third embodiment shown in Fig. 4, a fairly wide area of the heat exchanger core surface 25a is seen directly from the exterior through both intake ports 27 and 34 as is understood from the relation of straight lines A and B in the same figure. This is disadvantageous in point of shutoff of the direct sound.

In view of this point, according to a sixth embodiment of the present invention, with the construction of the third embodiment as a premise, the upper surface portion of the cover member 21 is raised and the first intake port 27 is formed at a position higher than in the third embodiment and shift to the heat exchanger 25 side (to the right side in the drawing).

In this case, in order to ensure an opening area necessary for the intake port 27, it is preferable that the heat exchanger-side opening edge portion of the first intake port 27 in the cover member 21 be inclined as shown in the drawing.

By so doing, as shown in the drawing, it is possible to make straight lines A and B approximately coincident with each other and hence possible to obtain a state in which the heat exchanger core surface 25a is not directly seen from the exterior.

### Seventh Embodiment (see Fig. 9)

In a seventh embodiment of the present invention, as a modification of both first and second embodiments, the whole of the duct front face portion 33 is inclined and a second intake port 34 is formed in only the upper half of the duct front face portion.

According to this construction, in comparison with the first and second embodiments, there is a disadvantage that the heat exchanger core surface 25a is easily seen directly from the exterior, but there is attained a high air volume increasing effect because the second intake port 34 lies in the portion of a maximum sectional area and hence the introduced air can be supplied into the duct 28 smoothly without waste.

### Eighth Embodiment (see Fig. 10)

In an eighth embodiment of the present invention, a guide plate 38 is disposed in an inlet portion of the second intake port 34 in the lower portion of the second compartment 26b of the intake chamber.

As shown in Fig. 10, the guide plate 38 is declined forward toward the lower edge portion of the second intake port 34.

According to this construction, the air sucked in from above is turned its flowing direction smoothly by the guide plate 38 at the inlet portion of the second intake port 34 and can be conducted positively to the second intake port 34.

Besides, since the guide plate 38 is inclined, it is possible to prevent staying of air and the creation of a turbulent flow at the inlet portion of the second intake port 34.

Although the construction of the first embodiment is premised here, the above construction using the guide plate 38 is also applicable to the other embodiments.

### Ninth Embodiment (see Fig. 11)

According to a ninth embodiment of the present invention, in a so-called rear small rotating type (including a rear ultra-small rotating type) machine in which a counterweight is used also as a cover member in the rear of the engine room and both right and left side portions thereof (only the left side portion is shown) 39 are positioned in a lapping state sideways of the engine room 22, an air guide surface 40 for conducing the introduced air to the second intake port 34 is formed in a forwardly descending stepwise shape in a lower part of an inner surface of the left side portion 39 which faces the intake chamber 26 in the counterweight.

According to this construction, the flow of air in the inlet portion of the second intake port 34 can be improved by the air guide surface 40. That is, a good intake performance can be attained even without addition of another guide plate. Therefore, the cost can be kept low.

Although in this embodiment the air guide surface 40 is formed stepwise due to a restriction on molding of the counterweight, if there is no such restriction, it is preferable that the air guide surface 40 be formed as such a forwardly declining rectilinear slant surface as indicated by a dash-double dot line in Fig. 11.

### Tenth Embodiment (see Fig. 12)

In a tenth embodiment of the present invention, a square shielding plate 41 is used as the shielding member in place of the duct 28 described in each of the first to ninth embodiments.

The shielding plate 41 is disposed in a state in which its peripheral edge portion contacts the inner surface of the cover member 21 present on four sides and the shielding plate partitions the interior of the intake chamber 26 into a first compartment 26a on the heat exchanger 25 side and a second compartment 26b on the opposite side throughout the entire width in the forward-rear direction of the machine.

In this construction, the whole of the shielding plate 41 serves as an intake passage-forming surface which forms an intake passage 37 between it and a side face portion of the cover member, and the whole of the shielding plate 41 is inclined in a direction in which the sectional area of the intake passage 37 becomes maximum at the upper portion and decreases gradually toward the lower portion.

A second intake port 34 with filter 35 is formed in the shielding plate 41 and an L-shaped air flow passage is formed by the shielding plate 41. This construction is the same as in the other embodiments.

The second intake port 34 may be formed in only the lower half portion as shown in the drawing or may be formed throughout the whole of the shielding plate. Moreover, without tilting the whole of the shielding plate 41, only the upper half portion may be inclined as in the fourth embodiment using the duct type.

Also according to the shielding plate type construction of this tenth embodiment, the intake chamber 26 is formed as a double wall structure in the horizontal direction by disposing the shielding plate 41 within the intake chamber 26. Consequently, a sound can be blocked doubly by the cover member 21 and the shielding plate 41. A high sound damping effect can be obtained because a sound repeats reflection and attenuation in the first and second compartments 26a, 26b of the intake chamber 26. Moreover, there is obtained a sound damping effect by the L-shaped flow passage. As a result, it is possible to obtain a soundproof effect almost equal to that in the duct type of each of the first to ninth embodiments.

Further, the effect of increase in air volume induced by inclination of the shielding plate 41 can also be obtained as in the duct type.

That is, also in the shielding plate type it is possible to obtain both soundproof function and cooling efficiency.

Although the invention has been described with reference to the preferred embodiments in the attached figures, it is noted that equivalents may be employed and substitutions made herein without departing from the scope of the invention as recited in the claims.

An engine, a cooling fan and a heat exchanger are disposed within an engine room covered with a cover member, while an intake chamber is formed on an intake side of the heat exchanger. A first intake port is formed in an upper chamber wall of the intake chamber and a duct is disposed on a front face side of a heat exchanger core surface in the intake chamber. In a cooling structure of a construction machine which premises the above construction, a front face portion of the duct is inclined in a direction in which the sectional area of an intake passage formed between the duct front face portion and a side face portion of the cover member becomes maximum at the upper portion and decreases gradually toward the lower portion, and a second intake port is formed in a lower half of the front face portion.

## Claims

1. A cooling structure of a construction machine, comprising:
an engine (23), a heat exchanger (25), a cooling fan (24) and a cover member (21) which covers an engine room (22) in which said engine (23), said heat exchanger (25) and said cooling fan (24) are provided;
the cooling structure being constructed in such a manner that the outside air is sucked into said engine room (22) by rotation of said cooling fan (24) and is passed through said heat exchanger (25), and satisfying the following conditions:
(A) on an intake side of said heat exchanger (25) in said engine room (22) an intake chamber (26) is formed independently of the other space in said engine room (22);
(B) a first intake port (27) for the introduction of outside air into said intake chamber (26) is formed in a chamber wall of said intake chamber (26) formed by said cover member (21); **characterised in that**,
(C) on a front side of a heat exchanger core surface (25a) in said intake chamber (26) a shielding member (28, 41) is disposed so as to cut off communication between said heat exchanger core surface (25a) and said first intake port (27) and partition the interior of said intake chamber (26) into two compartments (26a, 26b) and in a state in which an intake passage (37) is formed between an intake passage-forming surface of at least one surface of said shielding member (28, 41) and said cover member (21);
(D) a second intake port (34) for conducting the air introduced from said first intake port (27) to said heat exchanger core surface (25a) is formed in said intake passage-forming surface of said shielding member (28, 41); and
(E) at least the portion of said intake passage-forming surface of said shielding member (28, 41) where said second intake port (34) is formed is inclined in a direction in which the sectional area of said intake passage (37) becomes maximum on the first intake port (27) side and decreases gradually toward the opposite side.

2. A cooling structure of a construction machine according to claim 1, wherein both said first and second intake ports (27, 34) are formed between said first intake port (27) and said heat exchanger core surface (25a) in a state in which there is formed a bent air flow passage, including said intake passage (37).

3. A cooling structure of a construction machine according to claim 2, wherein said first intake port (27) and said second intake port (34) are formed in a state said in which air flow passage is formed in a substantially L shape.

4. A cooling structure of a construction machine according to claim 1, wherein, as said shielding member, a duct (28) independently formed of a duct material different from the material of said cover member (21) is disposed within said intake chamber (26) in which said duct (28) surrounds said heat exchanger core surface (25a) in an airtight manner and an intake passage (37) is formed between at least one surface of said duct (28) and said cover member (21), and said second intake port (34) is formed in an intake passage-forming surface of said duct (28) which surface forms said intake passage (37), said intake passage-forming surface being inclined at least at its portion where said second intake port (34) is formed.

5. A cooling structure of a construction machine according to claim 4, wherein said duct (28) has a front face portion (33) opposed to said heat exchanger core surface (25a) and both side face portions extending from both sides of horizontal direction of said front face portion (33) toward said heat exchanger core surface (25a), and second intake ports (27, 34) are formed in said both side face portions.

6. A cooling structure of a construction machine according to claim 1, wherein a shielding plate (41) is provided as said shielding member so as to shield between said heat exchanger core surface (25a) and said first intake port (27), that is total width of said intake chamber (26) and in a state in which the shielding plate (41) itself serves as an intake passage-forming surface and forms an intake passage (37) between it and said cover member (21), said second intake port (34) is formed in said shielding plate (41), and said shielding plate (41) is inclined at least at its portion where said second intake port (34) is formed.

7. A cooling structure of a construction machine according to claim 1, wherein the whole of said intake passage-forming surface including said second intake port-formed portion of said shielding member (28, 41) is inclined.

8. A cooling structure of a construction machine according to claim 7, wherein said second intake port (34) is formed on an intake downstream side of said intake passage-forming surface.

9. A cooling structure of a construction machine according to claim 7, wherein said second intake port (34) is formed throughout the whole of said intake passage-forming surface.

10. A cooling structure of a construction machine according to claim 1, wherein said intake passage-forming surface of said shielding member (28, 41) is inclined at only its intake upstream-side portion.

11. A cooling structure of a construction machine according to claim 1, wherein a positional relation of both said first and second intake ports (27, 34) is set in such a manner that the heat exchanger core surface (25a) is not directly seen from the exterior through both said intake ports (27, 34).

12. A cooling structure of a construction machine according to claim 1, wherein a filter (35) is attached to said shielding member (28, 41) so as to cover said second intake port (34).

13. A cooling structure of a construction machine according to claim 1, wherein air guide means for conducting introduced air to said second intake port (34) is disposed in an air inlet portion of said second intake port (34) within said intake chamber (26).

## Patentansprüche

1. Kühlungsaufbau einer Baumaschine, mit:
einer Maschine (23), einem Wärmetauscher (25), einem Kühlgebläse (24) und einem Abdeckungsbauteil (21), das einen Maschinenraum (22) abdeckt, in dem die Maschine (23), der Wärmetauscher (25) und das Kühlgebläse (24) vorgesehen sind;
wobei der Kühlungsaufbau in solch einer Weise aufgebaut ist, dass die Außenluft in den Maschinenraum (22) durch Drehung des Kühlgebläses (24) angesaugt wird und durch den Wärmetauscher (25) hindurchgeführt wird, und die folgenden Bedingungen erfüllt:
(A) an einer Einlassseite des Wärmetauschers (25) in dem Maschinenraum (22) ist eine Einlasskammer (26) unabhängig von dem anderen Raum in dem Maschinenraum (22) ausgebildet;
(B) ein erster Einlassanschluss (27) für die Einleitung einer Außenluft in die Einlasskammer (26) ist in einer Kammerwand der Einlasskammer (26) ausgebildet, die durch das Abdeckbauteil (21) ausgebildet ist;
**dadurch gekennzeichnet, dass**
(C) an einer Vorderseite einer Wärmetauscherkernfläche (25a) in der Einlasskammer (26) ein Abschirmbauteil (28, 41) angeordnet ist, um eine Verbindung zwischen der Wärmetauscherkernfläche (25a) und dem ersten Einlassanschluss (27) zu unterbrechen und das Innere der Einlasskammer (26) in zwei Abteile (26a, 26b) und in einem Zustand zu teilen, in dem ein Einlassdurchgang (37) zwischen einer einlassdurchgangsbildenden Fläche von wenigstens einer Fläche des Abschirmbauteils (28, 41) und des Abdeckbauteils (21) ausgebildet ist;
(D) ein zweiter Einlassanschluss (34) zum Führen der Luft, die von dem ersten Einlassanschluss (27) eingeleitet wird, zu der Wärmetauscherkernfläche (25a) in der einlassdurchgangsbildenden Fläche des Abschirmbauteils (28, 41) ausgebildet ist; und
(E) wenigstens der Abschnitt der einlassdurchgangsbildenden Fläche des Abschirmbauteils (28, 41), wo der zweite Einlassanschluss (34) ausgebildet ist, in einer Richtung geneigt ist, in der die Schnittfläche des Einlassdurchgangs (37) an der Seite des ersten Einlassanschlusses (27) maximal wird und sich allmählich in Richtung zu der entgegengesetzten Seite verringert.

2. Kühlungsaufbau einer Baumaschine nach Anspruch 1, wo sowohl der erste als auch der zweite Einlassanschluss (27, 34) zwischen dem ersten Einlassanschluss (27) und der Wärmetauscherkernfläche (25a) in einem Zustand ausgebildet sind, in dem ein gebogener Luftströmungsdurchgang einschließlich des Einlassdurchgangs (37) ausgebildet ist.

3. Kühlungsaufbau einer Baumaschine nach Anspruch 2, wobei der erste Einlassanschluss (27) und der zweite Einlassanschluss (34) in einem Zustand ausgebildet sind, in dem ein Luftströmungsdurchgang in einer im Wesentlichen L-Form ausgebildet ist.

4. Kühlungsaufbau einer Baumaschine nach Anspruch 1, wobei, als das Abschirmbauteil, ein Kanal (28), der unabhängig aus einem Kanalmaterial ausgebildet ist, das sich von dem Material des Abdeckbauteils (21) unterscheidet, innerhalb der Einlasskammer (26) angeordnet ist, in der der Kanal (28) die Wärmetauscherkernfläche (25a) in einer luftdichten Weise umgibt, und ein Einlassdurchgang (37) zwischen wenigstens einer Fläche des Kanals (28) und dem Abdeckbauteil (21) ausgebildet ist, und der zweite Einlassanschluss (34) in einer einlassdurchgangsbildenden Fläche des Kanals (28) ausgebildet ist, die den Einlassdurchgang (37) bildet, wobei die einlassdurchgangsbildende Fläche wenigstens an ihrem Abschnitt geneigt ist, wo der zweite Einlassdurchgang (34) ausgebildet ist.

5. Kühlungsaufbau einer Baumaschine nach Anspruch 4, wobei der Kanal (28) einen Vorderflächenabschnitt (33) hat, der der Wärmetauscherkernfläche (25a) gegenüberliegt, und beide Seitenflächenabschnitte sich von beiden Seiten einer Horizontalrichtung des Vorderflächenabschnitts (33) in Richtung zu der Wärmetauscherkernfläche (25a) erstrecken, und zweite Einlassanschlüsse (27, 34) in den beiden Seitenflächenabschnitten ausgebildet sind.

6. Kühlungsaufbau einer Baumaschine nach Anspruch 1, wobei eine Abschirmplatte (41) als das Abschirmbauteil vorgesehen ist, um zwischen der Wärmetauscherkernfläche (25a) und dem ersten Einlassanschluss (27), was die Gesamtbreite der Einlasskammer (26) ist, und in einem Zustand abzuschirmen, in dem die Abschirmplatte (41) selbst als eine einlassdurchgangsbildende Fläche dient und einen Einlassdurchgang (37) zwischen sich und dem Abdeckbauteil (21) ausbildet, wobei der zweite Einlassanschluss (34) in der Abschirmplatte (41) ausgebildet ist, und die Abschirmplatte (41) wenigstens bei ihrem Abschnitt geneigt ist, wo der zweite Einlassanschluss (34) ausgebildet ist.

7. Kühlungsaufbau einer Baumaschine nach Anspruch 1, wobei die gesamte einlassdurchgangsbildende Fläche einschließlich des zweiten einlassanschlussausgebildeten Abschnitts des Abschirmbauteils (28, 41) geneigt ist.

8. Kühlungsaufbau einer Baumaschine nach Anspruch 7, wobei der zweite Einlassanschluss (34) an einer einlassstromabwärtigen Seite der einlassdurchgangsbildenden Fläche ausgebildet ist.

9. Kühlungsaufbau einer Baumaschine nach Anspruch 7, wobei der zweite Einlassanschluss (34) über das Gesamte der einlassdurchgangsbildenden Fläche ausgebildet ist.

10. Kühlungsaufbau einer Baumaschine nach Anspruch 1, wobei die einlassdurchgangsbildende Fläche des Abschirmbauteils (28, 41) nur bei ihrem einlassstromaufwärtsseitigen Abschnitt geneigt ist.

11. Kühlungsaufbau einer Baumaschine nach Anspruch 1, wobei eine positionale Beziehung von sowohl dem ersten als auch dem zweiten Einlassanschluss (27, 34) in solch einer Weise festgelegt ist, dass die Wärmetauscherkernfläche (25a) von der Außenseite durch die beiden Einlassanschlüsse (27, 34) hindurch nicht direkt gesehen wird.

12. Kühlungsaufbau einer Baumaschine nach Anspruch 1, wobei ein Filter (35) an dem Abschirmbauteil (28, 41) angebracht ist, um den zweiten Einlassanschluss (34) zu bedecken.

13. Kühlungsaufbau einer Baumaschine nach Anspruch 1, wobei eine Luftführungseinrichtung zum Führen von eingeleiteter Luft zu dem zweiten Einlassanschluss (34) in einem Lufteinlassabschnitt des zweiten Einlassanschlusses (34) innerhalb der Einlasskammer (26) angeordnet ist.

## Revendications

1. Structure de refroidissement d'une machine de construction, comprenant :
un moteur (23), un échangeur de chaleur (25), un ventilateur de refroidissement (24) et un élément de couverture (21) qui couvre un compartiment moteur (22) dans lequel ledit moteur (23), ledit échangeur de chaleur (25) et ledit ventilateur de refroidissement (24) sont prévus ;
la structure de refroidissement étant construite de sorte que l'air extérieur soit aspiré dans ledit compartiment moteur (22) par rotation dudit ventilateur de refroidissement (24) et traverse ledit échangeur de chaleur (25), et satisfaisant les conditions suivantes :
(A) sur un côté d'admission dudit échangeur de chaleur (25) dans ledit compartiment moteur (22) une chambre d'admission (26) est formée indépendamment de l'autre espace dans ledit compartiment moteur (22) ;
(B) un premier orifice d'admission (27) pour l'introduction de l'air extérieur dans ladite chambre d'admission (26) est formé dans une paroi de chambre de ladite chambre d'admission (26) formée par ledit élément de couverture (21) ; **caractérisée en ce que**
(C) sur un côté avant d'une surface centrale (25a) d'échangeur de chaleur dans ladite chambre d'admission (26) un élément de blindage (28, 41) est disposé pour couper la communication entre ladite surface centrale (25a) d'échangeur de chaleur et ledit premier orifice d'admission (27) et diviser l'intérieur de ladite chambre d'admission (26) en deux compartiments (26a, 26b) et dans un état où un passage d'admission (37) est formé entre une surface de formation de passage d'admission d'au moins une surface dudit élément de blindage (28, 41) et ledit élément de couverture (21) ;
(D) un deuxième orifice d'admission (34) pour conduire l'air introduit à partir dudit premier orifice d'admission (27) à ladite surface centrale (25a) d'échangeur de chaleur est formé dans ladite surface de formation de passage d'admission dudit élément de blindage (28, 41) ; et
(E) au moins la partie de ladite surface de formation de passage d'admission dudit élément de blindage (28, 41) où ledit deuxième orifice d'admission (34) est formé est inclinée dans une direction dans laquelle la section dudit passage d'admission (37) devient maximale sur le côté du premier orifice d'admission (27) et diminue progressivement vers le côté opposé.

2. Structure de refroidissement d'une machine de construction selon la revendication 1, dans laquelle lesdits premier et deuxième orifices d'admission (27, 34) sont tous deux formés entre ledit premier orifice d'admission (27) et ladite surface centrale (25a) d'échangeur de chaleur dans un état où un passage courbé d'écoulement d'air est formé, comportant ledit passage d'admission (37).

3. Structure de refroidissement d'une machine de construction selon la revendication 2, dans laquelle ledit premier orifice d'admission (27) et ledit deuxième orifice d'admission (34) sont formés dans un état où ledit passage d'écoulement d'air est formé sensiblement en forme de L.

4. Structure de refroidissement d'une machine de construction selon la revendication 1, dans laquelle, comme ledit élément de blindage, un conduit (28) formé indépendamment d'un matériau de conduit différent du matériau dudit élément de couverture (21) est disposé dans ladite chambre d'admission (26) dans laquelle ledit conduit (28) entoure ladite surface centrale (25a) d'échangeur de chaleur de manière étanche à l'air et un passage d'admission (37) est formé entre au moins une surface dudit conduit (28) et ledit élément de couverture (21), et ledit deuxième orifice d'admission (34) est formé dans une surface de formation de passage d'admission dudit conduit (28) laquelle surface forme ledit passage d'admission (37), ladite surface de formation de passage d'admission étant inclinée au moins au niveau de sa partie où ledit deuxième orifice d'admission (34) est formé.

5. Structure de refroidissement d'une machine de construction selon la revendication 4, dans laquelle ledit conduit (28) présente une partie de face avant (33) opposée à ladite surface centrale (25a) d'échangeur de chaleur et les deux parties de face latérale s'étendant à partir des deux côtés de la direction horizontale de ladite partie de face avant (33) vers ladite surface centrale (25a) d'échangeur de chaleur, et des deuxièmes orifices d'admission (27, 34) sont formés dans lesdites deux parties de face latérale.

6. Structure de refroidissement d'une machine de construction selon la revendication 1, dans laquelle une plaque de blindage (41) est prévue comme étant ledit élément de blindage pour assurer le blindage entre ladite surface centrale (25a) d'échangeur de chaleur et ledit premier orifice d'admission (27), c'est-à-dire la largeur totale de ladite chambre d'admission (26) et dans un état où ladite plaque de blindage (41) même sert d'une surface de formation de passage d'admission et forme un passage d'admission (37) entre elle et ledit élément de couverture (21), ledit deuxième orifice d'admission (34) est formé dans ladite plaque de blindage (41), et ladite plaque de blindage (41) est inclinée au moins au niveau de sa partie où ledit deuxième orifice d'admission (34) est formé.

7. Structure de refroidissement d'une machine de construction selon la revendication 1, dans laquelle la totalité de ladite surface de formation de passage d'admission comportant ladite partie, où le deuxième orifice d'admission est formé, dudit élément de blindage (28, 41) est inclinée.

8. Structure de refroidissement d'une machine de construction selon la revendication 7, dans laquelle ledit deuxième orifice d'admission (34) est formé sur un côté aval d'admission de ladite surface de formation de passage d'admission.

9. Structure de refroidissement d'une machine de construction selon la revendication 7, dans laquelle ledit deuxième orifice d'admission (34) est formé sur la totalité de ladite surface de formation de passage d'admission.

10. Structure de refroidissement d'une machine de construction selon la revendication 1, dans laquelle ladite surface de formation de passage d'admission dudit élément de blindage (28, 41) est inclinée uniquement au niveau de sa partie côté amont d'admission.

11. Structure de refroidissement d'une machine de construction selon la revendication 1, dans laquelle une relation de position desdits premier et deuxième orifices d'admission (27, 34) est réglée de sorte que la surface centrale (25a) d'échangeur de chaleur ne soit pas directement visible depuis l'extérieur à travers lesdits deux orifices d'admission (27, 34).

12. Structure de refroidissement d'une machine de construction selon la revendication 1, dans laquelle un filtre (35) est fixé audit élément de blindage (28, 41) de façon à couvrir ledit deuxième orifice d'admission (34).

13. Structure de refroidissement d'une machine de construction selon la revendication 1, dans laquelle un moyen de guidage d'air destiné à guider l'air introduit audit deuxième orifice d'admission (34) est disposé dans une partie d'entrée d'air dudit deuxième orifice d'admission (34) dans ladite chambre d'admission (26).
